# EUROPEAN PATENT SPECIFICATION

(11) **EP 0 629 032 B1**
(45) Date of publication and mention of the grant of the patent: **25.03.1998**
(21) Application number: 93830259.3
(22) Date of filing: 10.06.1993
(51) Int. Cl.: H02J 1/00, H02J 7/00

(54) **Device for making the charge and revitalization treatment of batteries**
Vorrichtung zur Ausführung der Lade- und Revitalisierungsbehandlung für Batterien
Dispositif pour effectuer le traitement de charge et révitalisation de batteries

(43) Date of publication of application: 14.12.1994
(73) Proprietor: LARIMART S.p.A., I-00168 Roma (IT)
(72) Inventor: Capuani, Mauro, I-00168 Roma (IT)
(74) Representative: Cioni, Carlo

(56) References cited:
- EP-A- 0 470 065
- WO-A-90/06615
- WO-A-93/05560
- DE-A- 3 700 092
- DE-A- 3 834 004
- GB-A- 2 259 615

## Description

The present invention relates to a device for charging and revitalizing electric batteries, and more particularly sealed Ni-Cd batteries.

Such devices are commonly employed in different sectors in which an isolated power source is needed, particularly in electric or electronic field equipments, e.g. transceivers, portable terminals, remote control devices, and the like.

It is therefore necessary to check with particular care the conditions of the batteries being used, i.e. their charge conditions, efficiency and usage level.

In most cases it is also indispensable to be able to charge several batteries in the shortest time as possible, independently of the type and conditions of each one, as well as to subject one or more batteries to the so called revitalization process, i.e. a series of controlled charge and discharge cycles, that allows to restore the battery capacity as closest as possible to the original rated capacity, consistently with the usage level.

Namely, it is known that batteries are generally subjected to a capacity decrease with the increasing of their usage. This is also true for Ni-Cd batteries and particularly for the sealed Ni-Cd batteries.

At present there are known several different types of Ni-Cd battery recharging devices, particularly for charging the above mentioned sealed type. One of the most relevant problems to be solved in designing such devices is to reliably detect when the condition of full charge has been achieved for any of different types of batteries, thus preventing their overcharging.

This is very important since a wrong determination of the fully charged condition can lead either to a reduction of the battery efficiency when the process is early stopped, or to battery damages when the process is stopped too late.

Dealing with sealed Ni-Cd batteries further requires caution because of the many factors affecting the treatment processes. In fact, it is known that the chemical reactions taking place in most batteries when excessively charged cause a gas generation. More precisely, the conventional Ni-Cd batteries generate hydrogen and oxygen, that are normally discharged into the atmosphere. On the other hand, in sealed Ni-Cd batteries there is generated oxygen that is discharged through a safety valve provided for preventing the battery explosion, only when an internal over-pressure is reached, but the escaping gas carries away also part of the electrolyte, thus reducing the electrical capacity of the battery.

Moreover the chemical reactions in a sealed Ni-Cd battery are more affected by the temperature conditions in respect of the conventional Ni-Cd batteries.

WO-A-90/06615 discloses a device for charging and revitalising one or more batteries at the same time and it comprises:
- four independent channels to connect each battery to the device;
- a power supply and control module;
- a charge/discharge module;
- a microprocessor logic module with means for storing control programs and parameters to carry out different charging processes for different types of battery;
- an analog module; and
- an external interface module comprising means for manually starting and stopping and means for displaying the occurrence of certain events.

DE-A-3700092 deals with simultaneous charging of a plurality of batteries and discloses comparators for monitoring input and output voltages and means for manually starting and stopping a treatment process in each channel and means for selecting the kind of treatment each battery has to be subject to and the mode of process.

EP-A-0470065 deals also with simultaneous charging of a plurality of batteries and proposes means for monitoring over- and undervoltages, polarity reversal as well as means for selecting programs and parameters.

An object of the present invention is that of providing a device for recharging Ni-Cd batteries, that is capable of effectively dealing with more batteries of different types at the same time.

A further object of the present invention is that of providing a device capable of simultaneously recharging two or more sealed Ni-Cd batteries that allows the recharging of each battery in a quick and safe way.

A further object of the present invention is to obtain a device for simultaneously recharging two or more sealed Ni-Cd batteries and that is further capable of automatically carrying out a revitalizing process.

These objects are accomplished by the present invention that relates to a device for charging or revitalizing one or more batteries at the same time, of the type comprising:
a plurality of independent channels to connect each battery to the device;
a power supply and control module adapted to supply the device with the necessary voltages for the working thereof, and to control battery protection means;
a module for protecting the device and the batteries being charged against voltage changes or polarity reversal, as well as for filtering the input and output signals of the device;
a charge/discharge module to provide the charge/discharge sources for each channel;
a microprocessor logic module for controlling both the treatment processes to which said batteries are subjected and the device functions, said processes being carried out in a manner not depending on the characteristics of the rated capacity, the charging conditions and the treatment selected for each channel, said microprocessor logic module including means for storing control programs and means for storing parameters related to the processes in progress;
an analog module for detecting and controlling the voltages and currents supplied to the batteries;
an external interface module comprising means for manually starting and stopping a treatment process in each channel, means for selecting the kind of treatment each battery has to be subjected to, means for selecting the mode of each process, as well as means for displaying the occurrence of certain events related to the working of the device, to the process execution and the battery conditions;
characterized in that it provides a constant-current charge and an automatic switching to a constant-voltage charge when the voltage of the battery terminals reaches a maximum allowable value and the environment temperature is lower than a predetermined reference temperature,
and an automatic switching, from the constant-current charge, to a constant-current charge at a rate lower than the previous one when the voltage of the battery terminals reaches the maximum value and the environment temperature is higher than the predetermined reference value.

The present invention will now be described with details, by way of a non-limiting example, with reference to the accompanying drawings, in which:
- figure 1 is a front view of the device according to an embodiment of the invention;
- figure 2 is a schematic block diagram of the device;
- figures 3 to 8 are diagrams for illustrating the criteria for determining the accomplishment of a full charge process according to embodiments of the invention;
- figure 9 is a block diagram of the logic module of an embodiment of the invention;
- figure 10 is a block diagram of the analog module of an embodiment of the invention;
- figure 11 is a block diagram of the power supply and control module of an embodiment of the invention;
- figure 12 is a block diagram of the protection module of an embodiment of the invention;
- figure 13 is a block diagram of the charge/discharge module of an embodiment of the invention; and
- figure 14 is a block diagram of the external interface module of an embodiment of the invention;

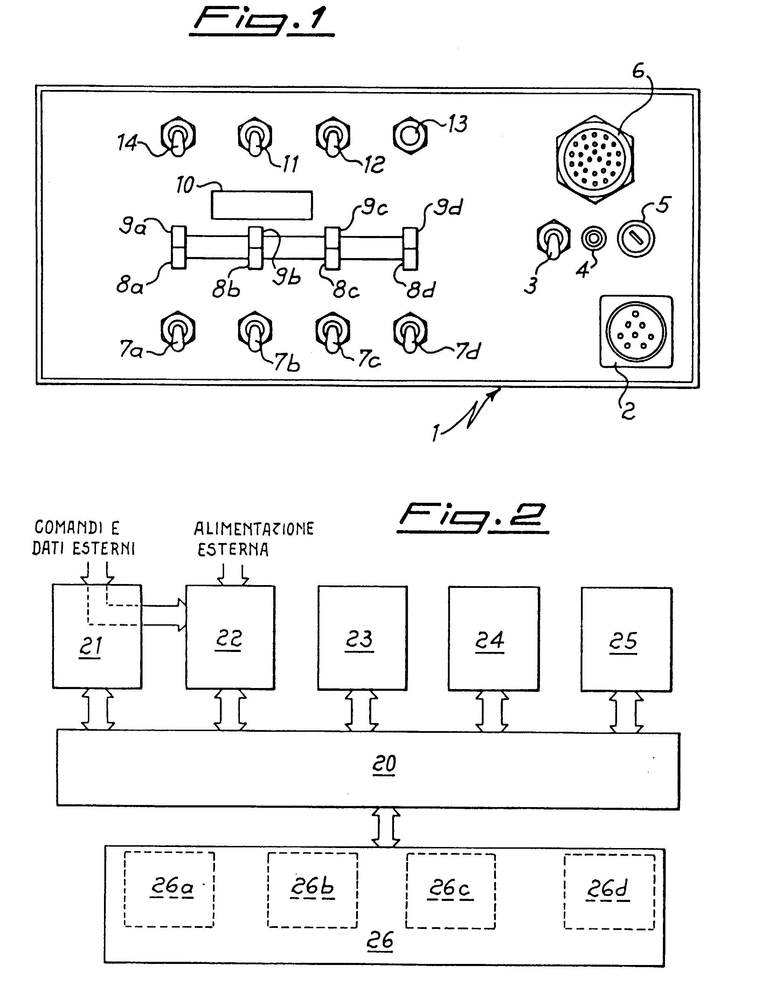

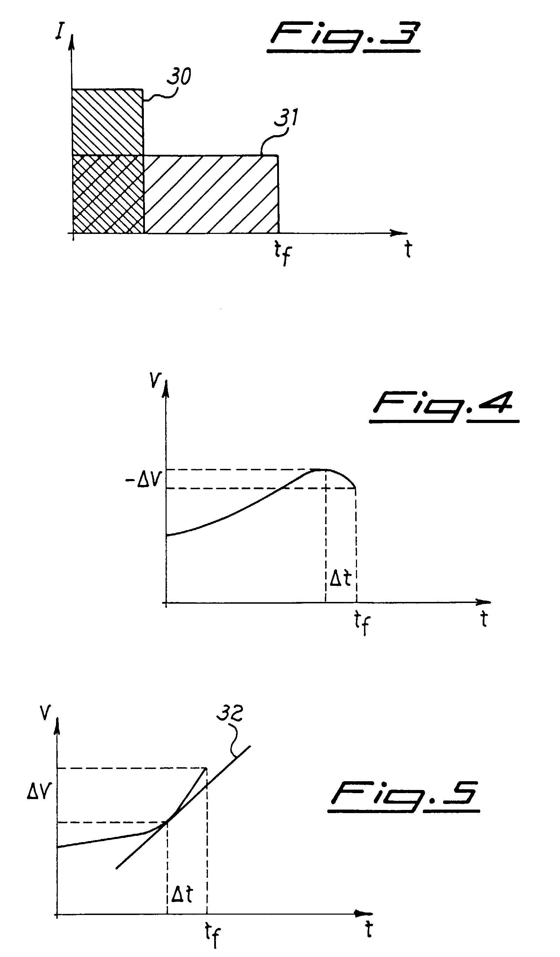

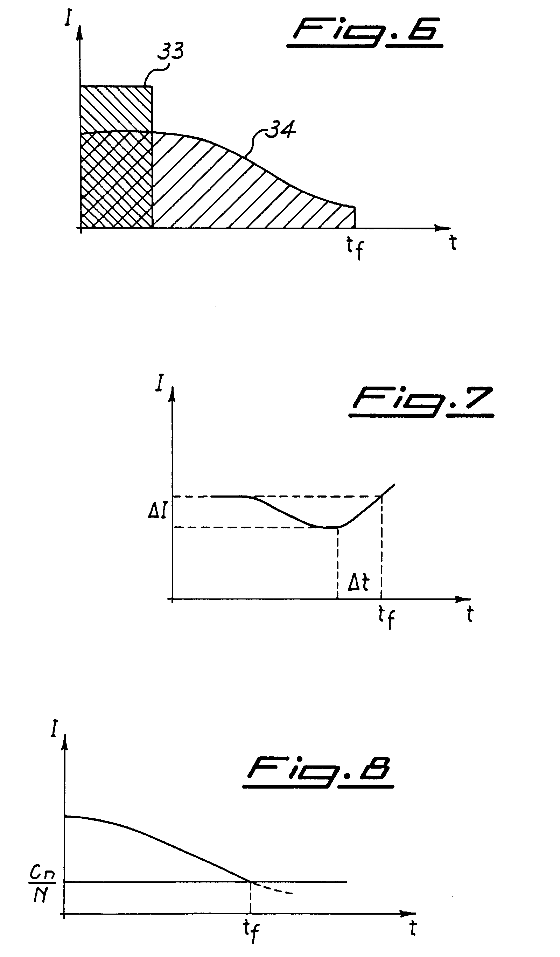

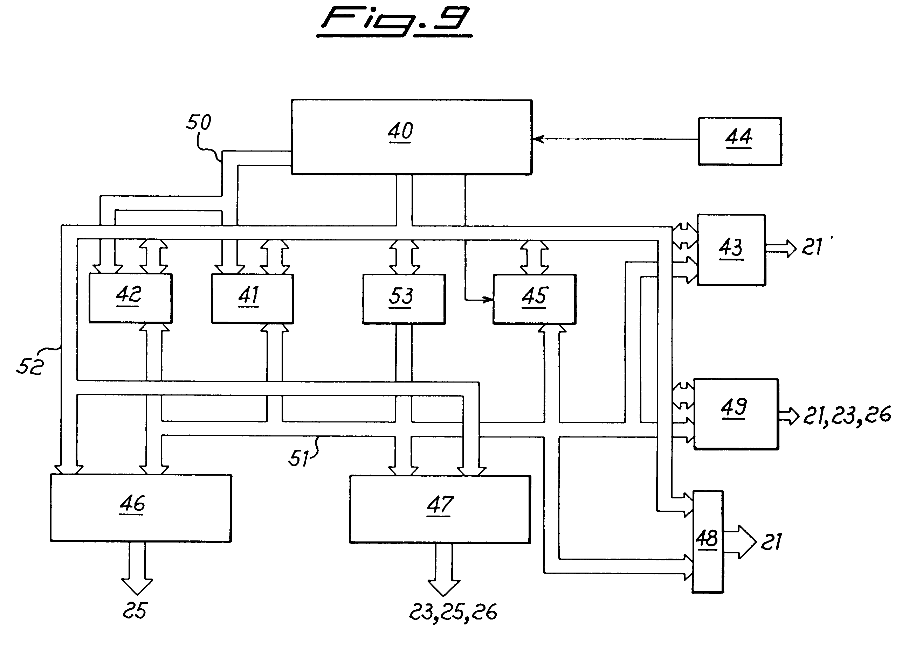

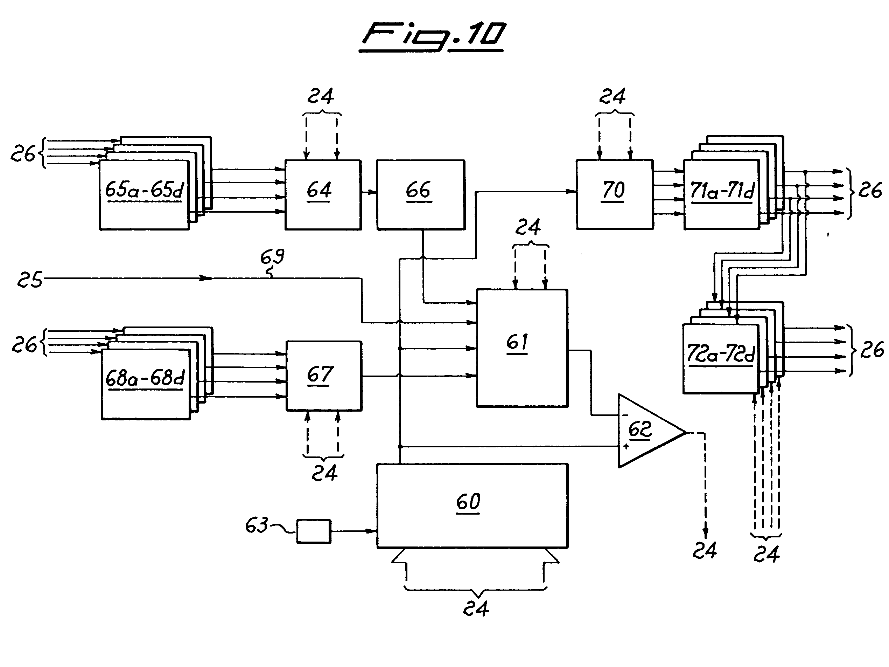

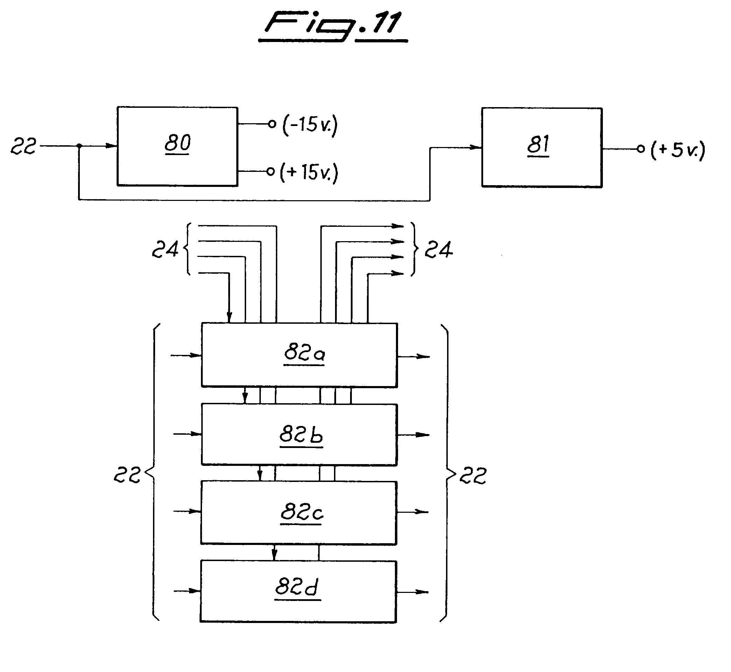

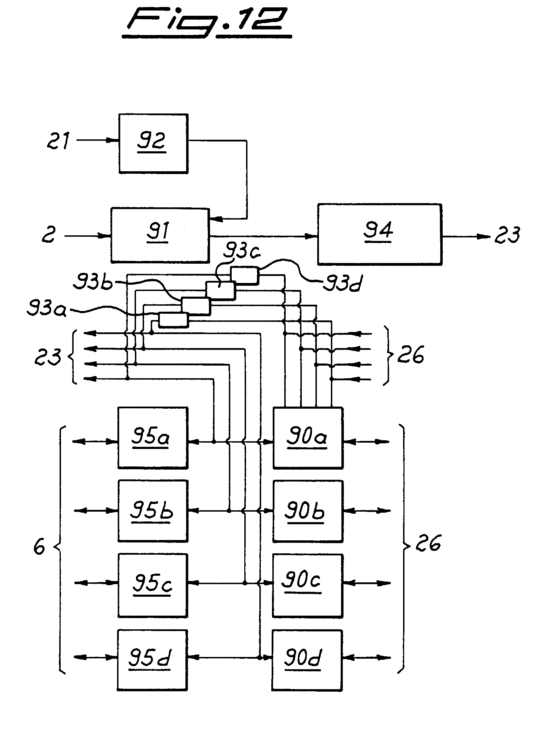

Figure 1 shows the main components that are mounted on the front panel of the battery treating device 1 according to the invention.

The device 1 is supplied by an external power source (not shown) through the power supply connector 2. The feeding voltage is comprised in a range from 10 to 32 volts and preferably is 24 volts.

This allows for the device being fed by the electric power from standard car batteries used by most vehicles.

There are provided an on/off switch 3 for energizing the device 1, a pilot lamp 4 indicating the on condition of the device 1 and a fuse 5 for the protection against possible malfunctions in the power line.

The device 1 is connected to a battery housing (not shown) through an output connector 6.

In a preferred embodiment, the device 1 is equipped with four independent channels for simultaneously handling four batteries, even of different type from one another. To each of the four channels there is associated one of four two-position monostable switches 7a, 7b, 7c, 7d, one of a series of red LEDs 8a, 8b, 8c, 8d, and one of a series of green LEDs 9a, 9b, 9c, 9d. In one of the position each switch 7 causes the start of the treatment or its stop during the process, while in the other position each switch 7 causes an indication of the percentage of the battery charging over the corresponding channel to be displayed in alphanumeric form on a display 10.

The red LEDs 8a-8d and the green LEDs 9a-9d are used for continuously indicating the process conditions of each channel.

More particularly the permanent lighting of a LED 8 indicates either that a battery is connected to the associated channel, or that a battery is being discharged in a step of a revitalizing process; the LED is turned off either when a charging process is started by actuating the corresponding switch 7, or when a battery is being charged in a step of a revitalizing process. A flashing condition of a LED 8 indicates a malfunction in the corresponding channel.

The permanent lighting of a LED 9 indicates that a treatment process is in progress in the corresponding channel, while the flashing condition of a LED 9 indicates that the process has been completed. In this case the device 1 maintains nevertheless a trickle charge in the corresponding channel until the process is stopped by acting on the corresponding switch 7.

A three-position switch 11 is used to select one of the device functions: i.e a charge treatment, a revitalizing treatment or a general test of the device conditions and the batteries connected thereto.

A similar three-position switch 12 is used to select one of the available charging rates, i.e. slow, standard, fast.

A push-button 13 is provided for stopping acoustic and/or visual warning signals from the device in case of troubles or failures. By pushing such button, the operator acknowledges the warning and enables the device to show on the alphanumeric display 10 a code of the trouble or failure.

In the preferred embodiment there is further provided a switch 14 for excluding any warning signal from the device without stopping the working thereof. This feature is particularly useful when it is desired to prevent the device from being located, e.g. in military applications when the device in being used during a mission requiring that enemy interception be prevented.

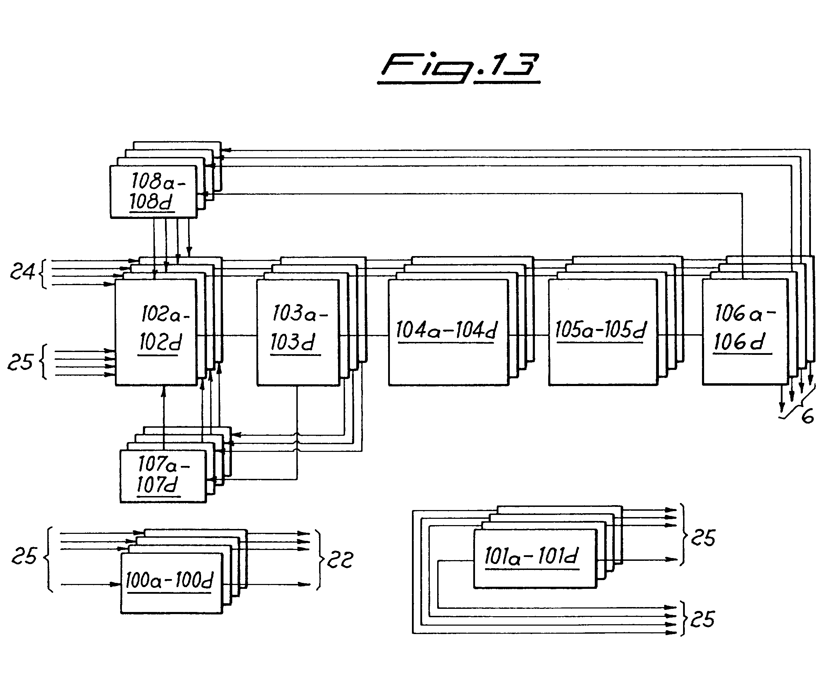

Figure 2 shows a general block diagram of the device including an interconnecting board 20 to which the different modules of the device 1 are connected.

More particularly there are provided: an external interface module 21 for handling the switching signals generated when the switches and push-buttons located on the device front panel are actuated (Figure 1), as well as for handling the warning signals on the front panel and any outwardly exchange of data through a serial interface of the RS-232 type; a module 22 for protecting both the device and the batteries against voltage swings or polarity reversal of the connected power source, as well as for filtering the input and output signals of the device; a power supply and control module 23 capable of supplying the voltages required for the device operation, as well as of checking the battery conditions; a microprocessor logic module 24 controlling both the battery treatment processes and the device functions; an analog module 25 for detecting and controlling the voltages and currents supplied to the batteries under charge; a charge/discharge module 26 for providing the charge/discharge sources for each channel.

The revitalizing treatment subjects a battery to a series of charge and discharge cycles.

In the preferred embodiment of the device there are provided from one to eight charge/discharge cycles, the first of which having a predetermined duration. More particularly the first charge process has a fixed duration of seven hours, whereas the subsequent ones are terminated in accordance with the standard methods for stopping the charge; the number of cycles is automatically determined by the device depending on the restored electric capacity at the end of each cycle.

The device 1, through the logic module 24, accomplishes a constant-current or constant-voltage charge depending on the environment temperature and on the voltage across each battery.

More particularly the charge process is first set at a constant current and it is so maintained till the voltage of the battery reaches the maximum allowed value, usually the one recommended by the manufacturer and being approximately in the range 1.6-1.7 volts. When the environment temperature is lower than a predetermined reference temperature, usually in the range from 0 °C to 5 °C, the device automatically switches to a constant-voltage charge.

On the contrary, if the temperature is higher than said reference temperature, the device automatically switches to a constant-current charge condition, at a charging rate lower than the previous one, i.e. from "fast" to "standard", or from "standard" to "slow", when the voltage at the battery terminals reaches the maximum allowed value. When the current charging rate is already the minimum rate allowed by the device, i. e. the "slow" charging rate, the device automatically switches into a constant-voltage charge condition when the voltage at the battery terminals reaches again the maximum allowed value. By automatically performing the processes in accordance with the above illustrated modes, a high level of charging efficiency is maintained and possible damages to the batteries are prevented under any usage conditions.

In case the charge is accomplished at a constant current value, the charging process is determined as completed when one of the following events takes place:
- the product of the supplied current and the process time exceeds a predetermined value of the battery rated capacity Cₙ. This situation is schematically illustrated in the cartesian diagram I versus t (current v. time) in Figure 3, where the area of rectangle 30 is equal to the battery rated capacity Cₙ, whereas the area of rectangle 31 is representative of the current supplied to the battery from the start of the charging process to time t_{f} when the process is stopped. In the preferred embodiment, the charging process is stopped when the product of the supplied current and the charge period exceeds about 1.3 the battery rated capacity Cₙ;
- a voltage decrease at the battery terminals for a pre-determined time interval. This situation is schematically illustrated in the cartesian diagram V versus t (voltage v. time) in Figure 4 showing a part of the curve representing the voltage at the battery terminals as a function of the time. The charging process is stopped at time t_{f} if the derivative of the voltage curve is negative, i.e. it exhibits a decrease ΔV in correspondence of a predetermined time interval Δt;
- an increase of the voltage at the battery terminals that exceeds a predetermined value for a given time interval. This situation is schematically illustrated in the cartesian diagram V versus t (voltage v. time) in Figure 5 showing a part of the curve representing the voltage at the battery terminals as a function of the time. The charging process is stopped at time t_{f} if the curve slope, i. e. the ratio between ΔV and Δt, exceeds a predetermined slope (e.g. that of the straight line 32) for a given time interval Δt.

In case none of the above conditions is met, the charging process is nevertheless stopped after a given time interval to prevent possible damages to the battery. The maximum duration of a charge process changes as a function of the selected charge mode, that is fourteen hours for a "slow" charging process, five hours for a "standard" charging process, and two hours for a "fast" charging process.

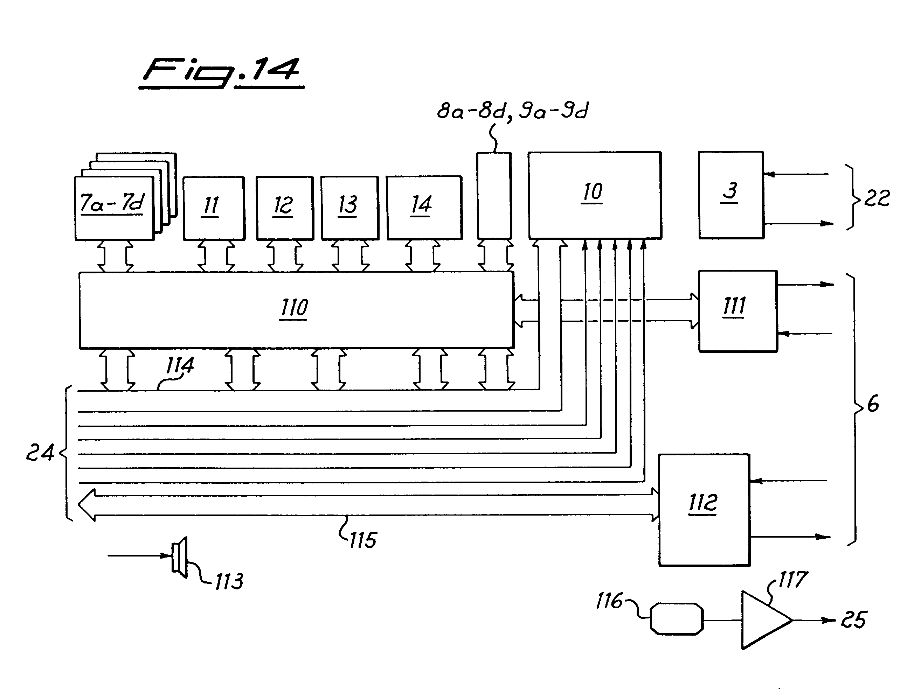

On the other hand, in a charge accomplished at a constant-voltage, the completion of the charging process is determined if one of the following events takes place:
- the product of the supplied current and the process time exceeds a predetermined value of the battery rated capacity . This situation is schematically illustrated in the cartesian diagram I versus t (current v. time) in Figure 6 where the area of rectangle 33 is equal to the battery rated capacity Cₙ, whereas the area under the curve 34 is representative of the current supplied to the battery from the start of the process until the time t_{f} when the process is stopped. Similarly to the case of the constant-current charge, the charging process is stopped when the product of the supplied current and the charging period exceeds about 1.3 the battery rated capacity Cₙ;
- an increase of the charging current for a predetermined time interval depending on the selected charging mode. This situation is schematically illustrated in the cartesian diagram I versus t (current v. time) in Figure 7, showing a part of the curve representing the current supplied to the battery as a function of the time. The charging process is stopped at time t_{f} if the curve of the supplied current shows an increase ΔI for a predetermined time interval Δt;
- the charging current is lower than a predetermined fraction of the battery rated capacity. This situation is illustrated in the cartesian diagram I versus t (current v. time) in Figure 8 showing a part of the curve representing the current supplied as a function of the time. The charging process is stopped if the current intensity drops below a limit equal to the N-th fraction of the battery rated capacity Cₙ. In the preferred embodiment the value N=20 is selected.

In this case too, if none of the above conditions is met, the charging process is nevertheless stopped after a predetermined time interval to prevent possible damages to the battery. However, in this case, the maximum duration of a charging process changes depending on the selected charging mode, that is twenty hours for a "slow" charging process, six hours and thirty minutes for a "standard" charging process, and three hours for a "fast" charging process.

At the end of each charging process in accordance with the selected modes, the device 1 subjects the battery to a trickle charging step that preserves the battery charge conditions at the same time preventing any risk of overcharge and consequently of battery damages.

The control and the execution of the different functions of the device 1 are carried out by the microprocessor logic module 24. More particularly, there are performed diagnostic tests in the device when power is turned on to detect possible malfunctions thereof, functions for automatically identifying the type, capacity and charging conditions of each battery, functions for detecting the conditions of open circuit, closed circuit and polarity reversal of each battery, functions for automatically selecting the modes and the charging rate for each battery in accordance with the conditions thereof and the temperature condition of the working environment, functions for automatically selecting the number of the charge and discharge cycles in the revitalizing process for each battery in accordance with its conditions, functions for monitoring the treatment processes to detect possible failures or malfunctions in the device or in the batteries, functions for determining the completion of the process for each battery and for maintaining a trickle charge condition, when the first condition is met, as well as functions for controlling said means for warning about events related to the working of the device and to the running processes.

Figure 9 shows a block diagram of the logic module 24 in which a microprocessor 40 is provided that operates in accordance with a program stored in an EPROM memory unit 41. One or more RAM memory units 42 store the parameters of the batteries or those of predetermined battery arrangements. The values of these parameters can be modified by means of an external terminal connected to a standard RS-232 serial port (Figure 14), provided on the external interface module 21, and connected in turn to a port 43 of the USART type, for allowing the conversion of parallel bit patterns into corresponding serial streams. A clock device 44 sets the operating frequency of the microprocessor 40 and provides a time base to a timer 45. There is further provided a standby battery (not shown) connected to the RAM memory units, for maintaining the stored data when the external power source is off. The exchange of the command and/or control signals with the remaining modules of the device is achieved through a pair of parallel ports 46 and 47, a buffer 48 and a control device 49 controlling the asynchronous interruption conditions. More particularly the parallel port 46 is connected to the analog module 25, the parallel port 47 is connected to the power supply and control module 23, to the charge/discharge module 26 and to the analog module 25, the buffer 48 is connected to the external interface module 21, and the device 49 controlling the asynchronous interruption conditions to the external interface module 21, to the power supply and control module 23 and to the charge/discharge module 26.

The connection between the units of the logic module 24 is accomplished through the bus lines 50, 51, for the address exchange, and a bus line 52 for the data exchange. An "address latch" device 53 allows for reading the addresses (less significant bits) on the line 51, and transferring them over the line 51 of the address bus.

Figure 10 shows the block diagram of the analog module 25 including a twelve bit digital to analog converter 60, connected to the logic module 24, and a plurality of analog multiplexers allowing for the voltage measurement at the battery terminals, the measurement of the battery charge or discharge currents and the control of the battery charge current. More particularly it is provided a main multiplexer 61 for applying one of the four input voltage signals to a comparator 62. The input voltages of the main multiplexer 61 are a function of the process values (voltages and currents, either detected or supplied to the batteries), as well as of the environment temperature. The comparator 62 produces an output signal for the logic module 24 by comparing the signal from the main multiplexer 61 with a signal produced by the converter 60 on the basis of a reference signal 63.

A multiplexer 64 selects one of the four output voltage signals from the current detecting units 65a-65d connected to the charge/discharge module 26. A polarity reversing device 66 is connected between the multiplexer 64 and the multiplexer 61, for reading the opposite polarity signal during the discharge processes.

The reading of the output voltages from the charge/discharge module 26 is accomplished by units 68a-68d adapted to detect voltages in the four channels, whereas the selection of one of the four signals is achieved through a multiplexer 67.

The connecting line 69 from the external interface module 21, carries a voltage signal representing the temperature of the environment in which processes are taking place.

For controlling the charge and discharge currents in the four channels a demultiplexer device 70 is provided that applies the voltage signal from the converter 60 to one of the four voltage holding circuits 71a-71d. The voltages at the outputs of circuits 71a-71d are applied to the charge/discharge module 26 and to the circuits 72a-72d driving the MOSFET devices of said module 26.

The input selection in the multiplexer devices 61, 64, 67 and the output selection in the demultiplexer 70, as well as the activation of the drive circuits 72a-72d are determined by the signals from the logic module 24.

Figure 11 shows a block diagram of the power supply and control module 23. This latter includes a first converter 80 for converting the feed voltage rated at 24 volts d.c. from the drive and filter module 22 into a +15 volts d.c. and a -15 volts d.c. as requested for the battery treatment processes. Through a second converter 81 the 24 volts d.c. rated voltage is converted into a +5 volt d.c. voltage for the operation of the device 1.

There are also provided four circuits 82a-82d for detecting possible short circuit and open circuit conditions of the batteries. Each circuit 82a-82d is actuated by a signal from the logic module 24 and sends back to the same module a binary signal indicating the state of the battery connected over the corresponding channel. Circuits 82a-82d drive corresponding relays in the protection module 22 for disconnecting a battery in case of a malfunction thereof.

Figure 12 reproduces a block diagram of the protection and filtering module 22. In the scheme there are shown the already mentioned battery protection relays labelled as 90a-90d. A series of devices 93a-93d protect the batteries against possible polarity reversal.

It further includes a relay 91 for protecting the device over the feeding line from the connector 2, to which the external power source is connected. The relay 91 is driven by a circuit 92 for the protection against possible peaks of the feed voltage at switching on.

The module 22 further includes the filters required to meet the interference requirements for the device 1 (EMI standards). Thus a filter 94 is provided in the 24 volt d.c. supply line connected to the power supply and control module 23, as well as four filters 95a-95d on the connection lines of the corresponding channels that lead to the connector 6 (Figure 1) on the front panel.

Figure 13 shows the block diagram of the battery charge/discharge module 26. This module includes the devices 100a-100d of the MOSFET type for discharging the batteries in the revitalizing processes, the circuits 101a-101d for sensing the battery currents, as well as a series of circuits and devices for monitoring the charge voltages and currents. More particularly they comprise four voltage-programmed drive circuits 102a-102d for the power supplied by the devices 103a-103d of the MOSFET type. These latter are serially connected transformer devices 104a-104d, rectifier devices 105a-105d and filtering devices 106a-106d for realizing the current sources with a limited power dissipation in the typical configurations of switching power supplies. There are further provided current limiting devices 107a-107d with a feedback connection between the MOSFET devices 103a-103d and the corresponding drive circuits 102a-102d, as well as voltage limiting devices 108a-108d with a feed-back connection between the filtering devices 106a-106d and the drive circuits 102a-102d. The limiting devices allow for keeping the voltage and current levels within the safety ranges to prevent battery damages.

Figure 14 shows the block diagram of the external interface module 21, that is the module that constitutes the interface between the operator and the microprocessor 40. The module 21 comprises a unit 100 of the "buffer latch" type for connecting the switching and signalling devices on the front panel (Figure 1). More particularly the connections concern the four switches 7a-7d for starting and stopping the process over the channels, the switch 12 for selecting one of the charging rates, the push-button 13 for acknowledging the alarm signals and stopping the warning signals, the switch 14 for excluding the external signals without interruption of the device 1, as well as the LEDs 8a-8d, 9a-9d. The device 110 is also connected to a decoder circuit 111 for identifying the type of the battery housing and the bus line 114 carrying data from the buffer 48 of the logic module 24 to the display 10. The switch 3 for turning on the device 1, although included in module 21, is directly connected to the protection and filtering module 22.

Additional connections to the logic module 24 comprise a serial line 115 for data transferring through an interface 112 of the RS-232 type, and a lead for energizing an acoustic signalling device 113.

A temperature transducer 116 connected to an amplifier 117 provides the analog module 25 with a voltage value representative of the temperature of the environment in which the device is working.

## Claims

1. A device for charging or revitalizing one or more batteries at the same time, comprising:
a plurality of independent channels to connect each battery to the device;
a power supply and control module (23) adapted to supply the device with the necessary voltages for the working thereof, and to control battery protection means;
a module (22) for protecting the device and the batteries being charged against voltage changes or polarity reversal, as well as for filtering the input and output signals of the device;
a charge/discharge module (26) to provide the charge/discharge sources for each channel;
a microprocessor logic module (24) for controlling both the treatment processes to which said batteries are subjected and the device functions, said processes being carried out for each channel in a manner not depending on the characteristics of the rated capacity, the charging conditions and the treatment selected for the other channels, said microprocessor logic module including means (41) for storing control programs and means (42) for storing parameters related to the processes in progress;
an analog module (25) for detecting and controlling the voltages and currents supplied to the batteries; and
an external interface module (21) comprising means (7a, 7b, 7c, 7d) for manually starting and stopping a treatment process in each channel, means (11) for selecting the kind of treatment each battery has to be subjected to, means (12) for selecting the mode of each process, as well as means for displaying the occurrence of certain events related to the working of the device, to the process execution and the battery conditions,
characterized in that it provides a constant-current charge and an automatic switching to a constant-voltage charge when the voltage of the battery terminals reaches a maximum allowable value and the environment temperature is lower than a predetermined reference temperature,
and an automatic switching, from the constant-current charge, to a constant-current charge at a rate lower than the previous one when the voltage of the battery terminals reaches the maximum value and the environment temperature is higher than the predetermined reference value.

2. A device as claimed in claim 1, characterized in that said reference temperature is within the range from 0 °C to +5 °C.

3. A device as claimed in claim 1, characterized in that said logic module (24) is adapted to determine the completion of the charging process when:
either the product of the supplied current and the process time exceeds a predetermined value of the battery rated capacity; or
a voltage decrease occurs at the battery terminals for a pre-determined time interval; or
an increase of the voltage at the battery terminals exceeds a predetermined value for a given time interval; or
if none of the above conditions is met, the duration of the charging process exceeds a predetermined time depending on the selected charging mode.

4. A device as claimed in claims 1 to 3, characterized in that said logic module (24) is adapted to determine the completion of the charging process for each battery, when:
either the product of the supplied current and the process time exceeds a predetermined value of the battery rated capacity; or
the charging current increases for a predetermined time interval depending on the selected charging mode; or
the charging current is lower than a predetermined fraction of the battery rated capacity; or when
in case none of the above conditions has been met, the duration of the charging process exceeds a prefixed time depending on the selected charging mode.

5. A device as claimed in claims 3 or 4, characterized in that it provides a pulsed charging step at the end of each charging or revitalizing treatment.

6. A device as claimed in claim 1, characterized in that said protection module (22) comprises a plurality of relays (90a-90d) controlled by circuits (93a-93d) provided in said feed module.

7. A device as claimed in claim 1, characterized in that said charge/discharge module (26) comprises power sources (102-108) adapted to reduce the power dissipation and devices (100a-100d) of the MOSFET type for discharging the batteries during the revitalizing treatments.

8. A device as claimed in claim 1, characterized in that said storing means in said microprocessor logic module (24) comprises an EPROM memory unit (41) for storing control programs and one or more RAM memory units (42) a for storing the parameters related to the running processes.

9. A device as claimed in claim 8, characterized in that said external interface module (21) comprises an RS-232 serial line (115) connected to a port (43) of the USART type in said logic module (24) to allow the connection with external peripheral devices adapted to store in said RAM memory (42) a plurality of parameters related to different battery arrangements.

10. A device as claimed in claim 8, characterized in that it provides a standby battery associated to said RAM memory units (42) for maintaining the stored data when the external power source is off.

11. A device as claimed in claim 1, characterized in that said analog module (25) comprises a twelve bit digital to analog converter (60) and a plurality of analog multiplexing devices (61, 64, 67, 70) to allow the measurement of the battery terminal voltage, the measurement of the charging or discharging battery current, and the control of the battery charging current.

12. A device as claimed in claim 1, characterized by a display means (8a-8d, 9a-9d) comprising an eight character alphanumeric display and a pair of LEDs for each channel.

13. A device as claimed in any of the preceding claims, characterized in that it comprises at least four of said channels.

14. Use of device as recited by any preceding claim in carrying out the charging or the simultaneous revitalizing of a plurality of sealed Ni-Cd batteries.

## Patentansprüche

1. Eine Vorrichtung zum Laden oder Revitalisieren einer oder mehreren Batterien zur gleichen Zeit, mit:
einer Mehrzahl von unabhängigen Kanälen, um jede Batterie mit der Vorrichtung zu verbinden;
einem Energieversorgungs- und Steuermodul (23), das dafür ausgelegt ist, die Vorrichtung mit den notwendigen Spannungen für deren Betrieb zu versorgen und um eine Batterieschutzvorrichtung zu steuern;
einem Modul (22) zum Schützen der Vorrichtung und der sich im Ladevorgang befindlichen Batterien vor Spannungsänderungen oder Verpolung, sowie zum Filtern der Eingangsund Ausgangssignale der Vorrichtung;
einem Lade-/Entlademodul (26), um die Lade-/Entladequellen für jeden Kanal bereitzustellen;
einem Mikroprozessor-Logikmodul (24) zur Steuerung sowohl der Behandlungsprozesse, welchen die Batterien unterworfen sind, als auch der Funktionen der Vorrichtung, wobei die Prozesse für jeden Kanal unabhängig von den Eigenschaften der festgelegten Kapazität, den Ladebedingungen und der für die anderen Kanäle ausgewählten Prozesse durchgeführt werden, wobei das Mikroprozessor-Logikmodul eine Vorrichtung (41) zum Speichern von Steuerprogrammen und eine Vorrichtung (42) zum Speichern von Parametern aufweist, welche den ablaufenden Prozessen zugeordnet sind;
einem Analogmodul (25) zur Erfassung und Steuerung der Spannungen und Ströme, welche den Batterien zugeführt werden;
einem externen Schnittstellenmodul (21) mit Vorrichtungen (7a, 7b, 7c, 7d) zum manuellen Starten und Anhalten eines Behandlungsprozesses für jeden Kanal, einer Vorrichtung (11) zum Auswählen der Art der Behandlung, der jede Batterie zu unterwerfen ist, einer Vorrichtung (12) zum Auswählen des Modus eines jeden Prozesses, sowie mit einer Vorrichtung zum Anzeigen des Auftretens bestimmter Ereignisse, die den Betrieb der Vorrichtung, der Durchführung des Prozesses und den Batteriezuständen zugeordnet sind,
dadurch gekennzeichnet,
daß eine Konstantstromladung und ein automatisches Umschalten auf eine Konstantspannungsladung vorgesehen sind, wenn die Spannung der Batterieanschlüsse einen maximal erlaubbaren Wert erreicht und die Umgebungstemperatur niedriger als eine bestimmte Referenztemperatur ist, und
daß ein automatisches Umschalten von der Konstantstromladung zu einer Konstantstromladung mit einem geringerem Wert als dem vorhergehenden erfolgt, wenn die Spannung der Batterieanschlüsse den Maximalwert erreicht und die Umgebungstemperatur höher als der bestimmte Referenzwert ist.

2. Eine Vorrichtung nach Anspruch 1, dadurch gekennzeichnet, daß der Referenztemperatur innerhalb eines Bereiches von 0 °C bis +5 °C liegt.

3. Eine Vorrichtung nach Anspruch 1, dadurch gekennzeichnet, daß das Logikmodul (24) dafür ausgelegt ist, den Abschluß des Ladeprozesses zu bestimmen, wenn:
entweder das Produkt aus zugeführtem Strom und der Prozesszeit einen bestimmten Wert der festgelegten Batteriekapazität übersteigt; oder
ein Spannungsabfall an den Batterieanschlüssen ein vorherbestimmtes Zeitinterval lang auftritt; oder
ein Anwachsen der Spannung an den Batterienanschlüssen für ein gegebenes Zeitinterval einen bestimmten Wert überschreitet; oder
wenn keine der obigen Bedingungen erfüllt ist, die Dauer des Ladeprozeses abhängig von dem ausgewähltem Lademodus eine bestimmte Zeit übersteigt.

4. Eine Vorrichtung nach einem der Ansprüche 1 bis 3, dadurch gekennzeichnet, daß das Logikmodul (24) dafür ausgelegt ist, den Abschluß des Ladeprozesses für jede Batterie zu bestimmen, wenn:
entweder das Produkt aus zugeführtem Strom und der Prozesszeit einen bestimmten Wert der festgelegten Batteriekapazität übersteigt; oder
der Ladestrom für ein bestimmtes Zeitinterval abhängig von dem ausgewähltem Lademodus anwächst; oder
der Ladestrom geringer als ein bestimmter Bruchteil der festgelegten Batteriekapazität ist; oder wenn
für den Fall, daß keine der obigen Bedingungen erfüllt ist, die Dauer des Ladevprozesses eine vorab festgelegte Zeit abhängig von den ausgewähltem Lademodus übersteigt.

5. Eine Vorrichtung nach Anspruch 3 oder 4, dadurch gekennzeichnet, daß sie am Ende einer jeder Lade- oder Revitalisierungsbehandlung einen Schritt des gepulsten Ladens bereitstellt.

6. Eine Vorrichtung nach Anspruch 1, dadurch gekennzeichnet, daß das Schutzmodul (22) eine Mehrzahl von Relais (90a bis 90d) aufweist, die von Schaltkreisen (93a bis 93d) in dem Versorgungsmodul gesteuert werden.

7. Eine Vorrichtung nach Anspruch 1, dadurch gekennzeichnet, daß das Lade-/Entlademodul (26) Energieversorgungsquellen (102 bis 108) aufweist, die dafür ausgelegt sind, die Verlustleitung zu verringern und Vorrichtungen (100a bis 100d) des MOSFET-Typs aufweist, um die Batterien während der Revitalisierungsbehandlungen zu entladen.

8. Eine Vorrichtung nach Anpruch 1, dadurch gekennzeichnet, daß die Speichervorrichtung in dem Mikroprozessor-Logikmodul (24) eine EPROM-Speichereinheit (41) zur Speicherung von Steuerprogrammen und eines oder mehrere RAM-Speichereinheiten (42) aufweist zur Speicherung der Parameter, die den ablaufenden Prozessen zugeordnet sind.

9. Eine Vorrichtung nach Anspruch 8, dadurch gekennzeichnet, daß das externe Schnittstellenmodul (21) eine RS-232 Serielleitung (115) aufweist, die mit einem Anschluß (43) des USART-Typs in dem Logikmodul (24) verbunden ist, um die Verbindung mit externen Peripheriegeräten zu ermöglichen, die dafür ausgelegt sind, in dem RAM-Speicher (42) eine Mehrzahl von Parametern zu speichern, welche unterschiedlichen Batterieanordnungen zugeordnet sind.

10. Eine Vorrichtung nach Anspruch 8, dadurch gekennzeichnet, daß eine Standby-Batterie bereitgestellt ist, welche den RAM-Speichereinheiten (42) zugeordnet ist, um gespeicherte Daten aufrecht zu erhalten, wenn die externe Energieversorgung abgeschaltet ist.

11. Eine Vorrichtung nach Anpruch 1, dadurch gekennzeichnet, daß das Analogmodul (25) einen 12-Bit Digital/Analog-Wandler (60) und eine Mehrzahl von Analog-Multiplexvorrichtungen (61, 64, 67, 70) aufweist, um die Messung der Batterieanschlußspannung, die Messung des Batterieladeoder Entladestromes zu messen und um den Batterieladestrom zu steuern.

12. Eine Vorrichtung nach Anspruch 1, gekennzeichnet durch eine Anzeigevorrichtung (8a bis 8d, 9a bis 9d) mit einer alphanumerischen Anzeige mit 8 Zeichen und einem Paar von LEDs für jeden Kanal.

13. Eine Vorrichtung nach einem der vorhergehenden Ansprüche, dadurch gekennzeichnet, daß sie wenigstens vier der Kanäle aufweist.

14. Verwendung der Vorrichtung nach einer der vorhergehenden Ansprüche zur Durchführung des Ladens oder des gleichzeitigen Revitalisierens einer Mehrzahl von gekapselten Ni-Cd-Batterien.

## Revendications

1. Dispositif pour charger ou revitaliser simultanément une ou plusieurs batteries, comprenant :
. une pluralité de voies indépendantes pour connecter chaque batterie au dispositif ;
. un module (23) d'alimentation et de commande conçu pour fournir au dispositif les niveaux de tension nécessaires à leur fonctionnement, et à commander le moyen de protection de la batterie ;
. un module (22) pour protéger le dispositif et les batteries en charge contre les fluctuations de tension ou l'inversion de polarité, ainsi que pour filtrer les signaux d'entrée et de sortie du dispositif ;
. un module (26) de charge/décharge fournissant les sources de charge/décharge à chaque voie ;
. un module (24) logique à microprocesseur pour commander à la fois les procédés des opérations de traitement auxquelles les batteries sont soumises et les fonctions du dispositif, ces procédés étant mis en oeuvre pour chaque voie d'une manière indépendante des caractéristiques de la capacité nominale, des conditions de recharge et des opérations sélectionnées pour les autres voies, ce module logique à microprocesseur comportant des moyens (41) pour mémoriser des programmes de commande et des moyens (42) pour mémoriser des paramètres relatifs aux procédés en cours ;
. un module (25) analogique de détection et de commande des tensions et courants fournis aux batteries ; et
. un module (21) externe d'interface comportant des moyens (7a,7b,7c,7d) pour démarrer et arrêter manuellement un procédé de traitement des opérations dans chaque voie, des moyens (11) pour sélectionner le mode de traitement auquel chaque batterie doit être soumise, des moyens (12) pour sélectionner le mode de chaque procédé, ainsi que des moyens pour afficher l'occurrence de certains événements relatifs au fonctionnement du dispositif, au déroulement du procédé et à l'état de la batterie,
caractérisé en ce qu'il fournit une charge à courant constant et une commutation automatique vers une charge à voltage constant lorsque la tension aux bornes de batterie atteint une valeur maximale autorisée et que la température ambiante est inférieure à une température de référence prédéfinie, ainsi qu'une commutation automatique d'une charge à courant constant vers une charge à courant constant à un taux inférieur au précédent lorsque la tension aux bornes de la batterie atteint la valeur maximale et que la température ambiante est supérieure à la valeur de référence prédéfinie.

2. Dispositif selon la revendication 1,
caractérisé en ce que la température de référence est comprise entre 0°C et +5°C.

3. Dispositif selon la revendication 1,
caractérisé en ce que le module (24) logique est conçu pour déterminer l'achèvement du procédé de charge :
. soit lorsque le produit du courant fourni par la durée du procédé excède une valeur prédéfinie de la capacité nominale de la batterie, ou
. lorsqu'il se produit une baisse de tension au niveau des bornes de la batterie durant un intervalle de temps prédéfini, ou
. lorsqu'une augmentation de la tension au niveau des bornes de la batterie excède une valeur prédéfinie durant un intervalle de temps donné, ou
. dans le cas où aucune des conditions ci-dessus n'est réalisée, lorsque la durée du procédé de charge excède une durée prédéfinie dépendant du mode de charge sélectionné.

4. Dispositif selon l'une quelconque des revendications 1 à 3, caractérisé en ce que le module (24) logique est conçu pour déterminer l'achèvement du procédé de charge de chaque batterie :
. lorsque le produit du courant fourni par la durée du procédé excède une valeur prédéfinie de la capacité nominale de la batterie, ou
. lorsque le courant de charge augmente durant un intervalle de temps prédéfini dépendant du mode de charge sélectionné, ou
. lorsque le courant de charge est inférieur à une fraction prédéfinie de la capacité nominale de la batterie, ou
. dans le cas où aucune des conditions ci-dessus n'est réalisée, lorsque la durée du procédé de charge excède une durée prédéfinie dépendant du mode de charge sélectionné.

5. Dispositif selon l'une quelconque des revendications 3 ou 4, caractérisé en ce qu'il réalise une durée de charge pulsée à la fin de chaque période de charge ou de revitalisation.

6. Dispositif selon la revendication 1,
caractérisé en ce que le module (22) de protection comprend une pluralité de relais (90a-90d) commandés par des circuits (93a-93d) existant dans le module d'alimentation.

7. Dispositif selon la revendication 1,
caractérisé en ce que le module (26) de charge/décharge comprend des sources d'énergie (102-108) conçues pour réduire le pouvoir de dissipation et des dispositifs (100a-100d) du type MOSFET pour décharger les batteries durant les opérations de revitalisation.

8. Dispositif selon la revendication 1,
caractérisé en ce que les moyens de mémoire du module (24) logique à microprocesseur comportent une unité (41) de mémoire morte programmable effaçable EPROM pour mémoriser les programmes de commande et une ou plusieurs unités (42) de mémoire à accès sélectif RAM pour mémoriser les paramètres relatifs aux procédés de fonctionnement.

9. Dispositif selon la revendication 8,
caractérisé en ce que le module (21) externe d'interface comprend une ligne (115) série RS-232 reliée à un port (43) du type USART dans le module (24) logique pour permettre la connexion à des systèmes périphériques externes conçus pour stocker dans la mémoire (42) à accès sélectif RAM une pluralité de paramètres relatifs aux différents groupements de batteries.

10. Dispositif selon la revendication 8,
caractérisé en ce que il comprend une batterie de réserve associée aux unités (42) de mémoire à accès sélectif RAM pour conserver les données mémorisées lorsque la source d'énergie externe est éteinte.

11. Dispositif selon la revendication 1,
caractérisé en ce que le module (25) analogique comporte un convertisseur (60) numérique - analogique à douze bits et une pluralité de systèmes (61,64,67,70) analogiques de multiplexage pour permettre de mesurer le voltage définitif de la batterie, de mesurer la charge ou la décharge du courant de la batterie, et de contrôler le courant de charge de la batterie.

12. Dispositif selon la revendication 1,
caractérisé par un moyen d'affichage (8A-8d, 9A-9d) comprenant un affichage alphanumérique à huit caractères et une paire de diodes électroluminescentes pour chaque voie.

13. Dispositif selon l'une quelconque des revendications précédentes, caractérisé en ce qu'il comporte au moins quatre voies.

14. Utilisation du dispositif tel que décrit dans l'une quelconque des revendications précédentes, pour la charge ou la revitalisation simultanée d'une pluralité de batteries scellées Ni-Cd.
